# EUROPEAN PATENT SPECIFICATION

(11) **EP 0 517 511 B1**
(45) Date of publication and mention of the grant of the patent: **05.11.1997**
(21) Application number: 92305098.3
(22) Date of filing: 03.06.1992
(51) Int. Cl.: C08G 63/688, C08G 63/85, C08L 67/02

(54) **Process for the preparation of polyester, and its composition**
Verfahren zur Herstellung von Polyester, und dessen Zusammensetzung
Procédé de préparation d'un polyester, et une composition à base de celui-ci

(30) Priority: 03.06.1991 JP 131235/91; 03.06.1991 JP 131236/91
(43) Date of publication of application: 09.12.1992
(73) Proprietor: POLYPLASTICS CO. LTD., Chuo-Ku Osaka-shi Osaka 541 (JP)
(72) Inventor: Kawaguchi, Kuniaki, Numazu-shi, Shizuoka (JP); Nakane, Toshio, Fuji-shi, Shizuoka (JP); Hijikata, Kenji, Mishima-shi, Shizuoka (JP)
(74) Representative: Tebbit, Antony Hugh Edward

(56) References cited:
- EP-A- 0 121 051
- FR-A- 1 216 988
- GB-A- 2 091 273
- US-A- 2 822 348

## Description

### [FIELD OF INDUSTRIAL APPLICATION)

The present invention relates to a process for the preparation of a polyester resin which is of good moulding processability and mechanical properties and has improved rate of crystallisation. The invention also relates to a composition comprising such a polyester.

### [PRIOR ART)

Aromatic polyesters such as polybutylene terephthalate (PBT) have good heat resistance, chemical resistance and mechanical strength and are favourably used as engineering plastics. Particularly, PBT itself has a rate of crystallisation high enough to permit its injection moulding, but the moulding cycle thereof leaves room for further improvement.

On the other hand, a copolyester prepared by incorporating other comonomer into PBT or polybutylene naphthalate (PBN) generally has a remarkably low rate of crystallisation because the comonomer acts as an inhibitory factor against crystallisation, so that such a copolyester is poor in mouldability and mechanical strength and involves a problem in that pellets thereof stick together in a preparation step. Also, other homopolyesters such as polyethylene terephthalate (PET) polypropylene terephthalate (PPT) and polyethylene naphthalate (PEN) have a low rate of crystallisation themselves and are unsatisfactory not only in their processability in moulding but also in heat resistance and mechanical strength.

For the purpose of enhancing the rate of crystallisation of such an aromatic polyester, many proposals including the addition of a crystallisation accelerator have been made. For example, the addition of glass fibre was disclosed in Japanese Patent Publication No. 18768/1970, the addition of an insoluble solid inorganic substance having a specified particle size in Japanese Patent Publication No. 9470/ 1970 and the addition of an ionic polyolefin copolymer in Japanese Patent Publication No. 26225/1970. However, these crystallisation accelerators cannot be homogeneously dispersed in a polyester resin, even by sufficient kneading, owing to their poor solubility in the resin, so that their crystallisationaccelerating effects are still insufficient, particularly for copolyesters prepared by using many comonomers. The addition of such an accelerator in an increased amount for further accelerating the crystallisation of a polyester resin is not practical, because it considerably impairs the mechanical strength of the resin. Further, the alkali metal salt of an aromatic sulfonic acid disclosed in Japanese Patent Publication No. 56180/1985 (= GB-A-2 091 273) is insufficiently compatible with the resin to exhibit a sufficient crystallisation-accelerating effect, though it is superior to inactive powders in respect of dispersibility. Furthermore, the high-melting polyester resin disclosed in Japanese Patent Laid-Open No. 149942/1983 is poor in the crystallisation-accelerating effect, though it is excellent in the compatibility with a polyester resin. In EP-A-121 051 an alkali metal salt of a phenyl-sulfonic acic is introduced into the polymer chain of a polyester.

It is an object of the invention to provide an aromatic polyester having an improved rate of crystallisation and which is capable of affording good mechanical properties, and to provide a process of preparing such a polyester.

The present invention aims at providing a polyester which is freed from such a problem to exhibit excellent performances and a process for the preparation of the same.

The inventors of the present invention have intensively studied in order to solve the above problem and have found that an aromatic polyester which has a remarkably enhanced rate of crystallisation and is excellent in the processability in moulding and mechanical strength can be prepared by conducting the transesterification in the presence of a specified monofunctional compound by the use of a titanium compound as a catalyst and polycondensing the transesterification product. The present invention has been accomplished on the basis of this finding.

The present invention thus provides a process of preparing a polyester which comprises reacting a lower alkyl ester of an aromatic dicarboxylic acid with an aliphatic diol to form an aromatic polyester, characterized in that transesterification of such lower alkyl ester with such diol is carried out in the presence of 0.02 to 5.0 mole %, based on the lower alkyl ester, of an aromatic sulfonic acid compound represented by general formula (I)

HO-R-0-Ar-SO₃M (I)

wherein -Ar- is a group selected between p-substituted benzene and 2,6-substituted naphthalene groups;
R is a divalent group selected from among -CH₂CH₂-, -CH(CH₃)CH₂-, -CH₂CH(CH₃)- and -CH₂CH₂OCH₂CH₂-;
and M is an alkali metal selected from among lithium, sodium and potassium
using a titanium compound as a catalyst and thereafter polycondensing the transesterification product, and in which said aromatic sulfonic acid compound is present during a period of said transesterification before the amount of the lower alcohol formed by such transesterification distilled out has reached 90% by weight of the theoretical amount, whereby 0.02 to 5.0 mole % (based on the repeating ester units) of residue of said aromatic sulfonic acid compound is bonded to an end of the polyester backbone chain.

Aromatic polyesters according to the present invention are prepared by conducting the transesterification of the lower alkyl ester of an aromatic dicarboxylic acid with the aliphatic diol in the presence of a specified amount of the compound represented by the formula (I) and the titanium compound as a catalyst and thereafter polycondensing the transesterification product. Such aromatic polyesters include not only homopolyesters but also copolyesters composed of several kinds of ester units.

The lower alkyl ester of the aromatic dicarboxylic acid is preferably selected mainly (i.e. more than 50 mole %) from among dimethyl terephthalate, dimethyl 2,6-naphthalenedicarboxylate and dimethyl 2,7-naphthalenedicarboxylate. Such an ester is preferably used in an amount of 60 mole % or above, particularly preferably 70 mole % or above based on the whole acid component.

The aliphatic diol is preferably selected mainly (i.e. more than 50 mole %) from among ethylene glycol, 1,3-propanediol and 1,4-propanediol. Such a diol is preferably used in an amount of 60 mole % or above, particularly preferably 70 mole % or above based on the whole diol component.

Examples of the main repeating unit of the polyester according to the present invention include ethylene terephthalate, ethylene 2,6-naphthalate, ethylene 2,7-naphthalate, propylene terephthalate, propylene 2,6-naphthalate, propylene 2,7-naphthalate, butylene terephthalate, butylene 2,6-naphthalate and butylene 2,7-naphthalate. In particular, polyesters mainly comprising ethylene terephthalate, propylene terephthalate, butylene terephthalate, ethylene 2,6-naphthalate, propylene 2,6-naphthalate or butylene 2,6-naphthalate units are preferred.

In the preparation of the copolyester according to the present intention, it is of course, possible to use two or more acid components selected from among those described above.

Further, it is possible to use additionally one or more members selected from among known lower alkyl esters of difunctional carboxylic acid such as dimethyl diphenate, dimethyl 4,4'-diphenyldicarboxylate, dimethyl adipate, dimethyl sebacate or dimethyl 1,4-cyclohexanedicarboxylate.

Diol components which may be used include, of course, those described above, and further one or more other known difunctional diols such as diethylene glycol, triethylene glycol, 1,5-pentanediol, 1,6-hexanediol, neopenyl glycol, 1,10-decanediol. 1,4-cyclohexanedimethanol, 1,4-cyclohexanediol, p-xylylene glycol, adduct of hydroquinone with ethylene oxide, adduct of 2,2-bis(4-hydroxyphenyl)propane with ethylene oxide, adduct of bis(4-hydroxyphenyl) sulfone with ethylene oxide, adduct of 2,2-bis(3,5-dibromo-4-hydroxyphenyl)propane with ethylene oxide or adduct of 2,6-dihydroxynaphthalene with ethylene oxide.

Furthermore, an at least trifunctional compound such as trimethyl trimesate, trimethyl trimellitate, trimethylolpropane or pentaerythritol, a monofunctional compound such as stearyl alcohol or methyl o-benzoylbenzoate, a hydroxy carboxylic acid derivative such as methyl p-hydroxyethoxyphenylcarboxylate and/or a polyalkylene glycol such as polybutylene glycol may be used as additional components.

The present invention is in part characterized by adding a specified amount of an aromatic sulfonic acid compound represented by the following general formula (I) to the transesterification system as another starting material for the preparation of the polyester:

HO-R-O-Ar-SO₃M (I)

wherein -Ar- is a group selected between p-substituted benzene and 2,6-substituted naphthalene groups;
R is a divalent group selected from among -CH₂CH₂-, -CH(CH₃)CH₂-, -CH₂CH(CH₃)- and -CH₂CH₂OCH₂CH₂-;
and M is an alkali metal selected from among lithium, sodium and potassium

Specific examples of the compound represented by that formula (I) include adduct of sodium p-phenolsulfonate with one ethylene oxide molecule, adduct of sodium p-phenolsulfonate with one propylene oxide molecule, adduct of sodium p-phenolsulfonate with two ethylene oxide molecules, adduct of lithium p-phenolsulfonate with one ethylene oxide molecule, adduct of potassium p-phenolsulfonate with one ethylene oxide molecule, addict of sodium 2-naphthol-6-sulfonate with one ethylene oxide molecule, adduct of sodium 2-naphthol-6-sulfonate with one propylene oxide molecule, adduct of sodium 2-naphthol-6-sulfonate with two ethylene oxide molecules and adduct of lithium 2-naphthol-6-sulfonate with one ethylene oxide molecule.

Aromatic sulfonic acid compounds represented by the general formula (1) wherein -Ar- is a benzene ring substituted with a sulfonate group (-SO₃M) and an ester forming functional group (HO-R-O-) at relative positions other than p-positions or is a naphthalene ring substituted therewith at relative positions other than 2,6-positions, for example, adduct of sodium m-phenolsulfonate with one ethylene oxide molecule, adduct of sodium 1-naphthol-2-sulfonate with one ethylene oxide molecule, adduct of sodium 1-naphthol-4-sulfonate with one ethylene oxide molecule and adduct of sodium 1-naphthol-7-sulfonate with one ethylene oxide molecule are not sufficiently effective in accelerating the crystallisation of a polyester, as will be described in Comparative Examples. The reason why these compounds are ineffective, unlike the compounds of the present invention, is thought to be that the position of the ionic group (-SO₃M) bonded to the end of the backbone chain may have an influence upon the motion of the backbone chain.

Further, aromatic sulfonic acid compounds having two or more reactive functional groups, such as adduct of sodium 1,4-diphenyl-2-sulfonate with ethylene oxide, are undesirable, because an efficient introduction of the compound to the end of the backbone chain is too difficult to attain a sufficient crystallisation-accelerating effect as will also be described in Comparative Examples.

In some preferred embodiments of the invention, the compound represented by the general formula (I) is used in an amount of 0.02 to 1.80 mole %, particularly preferably 0.05 to 1.50 mole % based on said lower alkyl ester. When the amount is less than 0.02 mole % based on the lower alkyl ester, the resulting polyester will tend to be little improved in the rate of crystallisation, while using at most 1.80 mole %, preferably at most 1.5 mole % based on the lower alkyl ester, tends to promote a high degree of polymerisation and good mechanical strength in the resulting polyester. Accordingly, proportions within the said ranges are preferred.

It was confirmed that the compound represented by the formula (I) was hardly distilled out of the reaction system during the transesterification and the polycondensation, but the whole thereof used is introduced into the formed polymer. Accordingly, a preferred amount of the aromatic sulfonic acid compound represented by the general formula (I) may also be related to the repeating ester unites of the product of the process of the invention. Thus it is preferred that said aromatic sulfonic acid compound is present in an amount such that the product contains residue thereof in a proportion of 0.1 to 5.0 mole % based on all the repeating ester units of such product.

It is preferable that the aromatic sulfonic acid compound represented by the general formula (I) be added to the reaction system together with other starting materials of the polyester and a titanium compound which will be described below prior to the initiation of the transesterification or in an initial stage thereof, specifically before the amount of the lower alcohol formed by the transesterification and distilled out of the reaction system reaches 90% of the theoretical amount. It is particularly preferable that it be added to the reaction system prior to the initiation of the transesterification, i.e., when the amount of the lower alcohol distilled out is nearly 0.

The term "theoretical amount" used in this specification refers to the amount of the lower alcohol calculated based on the total amount of the lower alkyl ester(s) of carboxylic acid(s) used.

When the aromatic sulfonic acid compound represented by the general formula (I) is added in a final stage of the transesterification, i.e., at the point of time at which the amount of the lower alcohol distilled out has reached 90% by weight of the theoretical one or above, or in the course of the polycondensation, the resulting polyester will not have a sufficiently high rate of crystallisation, and undissolved part of the aromatic sulfonic compound will be dispersed heterogeneously, which brings about a scattering in the rate of crystallisation and gives a moulded article having an appearance impaired by the compound crystallised out on its surface as small foreign particles.

The present invention is also characterized by using a titanium compound as a catalyst. Examples of the titanium compound include titanium tetrabutoxide, titanium tetrapropoxide, titanium tetraethoxide, titanium isopropoxyoctylene glycol, titanium butoxyoctylene glycol, titanium isopropoxybutylene glycol, titanium dihydroxybislactate, titanium diisopropoxybisacetylacetonate, titanium dibutoxybistriethanolaminate and titanium isopropoxytriisostearate, among which titanium tetraalkoxides such as titanium tetrabutoxide, titanium tetrapropoxide and titanium tetraethoxide are particularly preferred.

The polyester resin of the present invention can be prepared by conducting the conventional polycondensation subsequent to the transesterification described above. Further, the resin thus obtained may be subjected to solid phase polymerisation either under a reduced pressure or in the presence of an inert gas to convert it into a product having a higher degree of polymerisation.

By the process of the present invention, a predetermined amount of a residue of the aromatic sulfonic acid compound can be efficiently bonded to the end of the backbone chain of a polyester resin, by which a polyester improved in the rate of crystallisation can be obtained without lowering the degree of polymerisation.

Depending on the purpose in view, one or more members selected from among other thermoplastic resins, additives, organic and inorganic fillers, and so forth may be auxiliarily added to the polyester of this invention.

The polyester resin prepared by the process of the present invention has an improved rate of crystallisation and an excellent processability in injection moulding (particularly a shortened moulding cycle) and gives a moulded article excellent in mechanical strength and heat resistance, thus being very useful as a moulding material.

The present invention includes a polyester which is obtained by the aforementioned process.

The present invention also extends to an aromatic polyester comprising at least 80 mole % of 1,4-butylene terephthalate or 1,4-butylene-2,6-naphthalate and 0.1 to 5.0 mole % (based on all the repeating ester units) of a residue of the aforementioned aromatic sulfonic acid compound which is bonded to the end of the backbone chain of the polyester through ester linkage.

Furthermore, the present invention provides a polyester resin composition prepared by blending
(A) 100 parts by weight of an aromatic polyester resin mainly comprising alkylene terephthalate or alkylene naphthalate repeating units, with
(B) 1 to 100 parts by weight of an aromatic polyester resin comprising at least 80 mole % of 1,4-butylene terephthalate or 1,4-butylene-2,6-naphthalate as a main repeating unit and 0.1 to 5.0 mole % (based on all the repeating ester units) of a residue of the aforementioned aromatic sulfonic acid compound which is bonded to the end of the backbone chain of the resin through ester linkage.

The aromatic polyester (B) to be used in the present invention is a polyester which contains a specified metal sulfonate group bonded to the end and the main repeating unit of which is 1,4-butylene terephthalate or 1,4-butylene 2,6-naphthalate. It is preferable from the standpoint of preventing a lowering in the crystallinity that such a main repeating unit be contained in an amount of 80 mole % or above, particularly preferably 90 mole % or above based on all the ester units constituting the resin (B). These constituent units can be formed by polycondensing a lower alkyl ester of an aromatic dicarboxylic acid, such as dialkyl terephthalate or dialkyl 2,6-naphthalenedicarboxylate, with 1,4-butanediol. Further, the copolyester to be used as the component (B) can be prepared by using an acid component other than the main acid component described above and/or a diol component other than the main diol component described above as additional components.

The amount of the residue of the aromatic sulfonic acid compound represented by the general formula (I) bonded to the end of the backbone chain is preferably 0.1 to 5.0 mole %, particularly preferably 0.2 to 3.0 mole %, based on all the repeating ester units. When the amount of such residue is greater than 0.1 mole %, there tends to be an improvement in the rate of crystallisation of the resulting polyester, while working so that the amount of such residue does not exceed 5.0 mole % tends to promote, in the resulting polyester (B), a high degree of polymerisation and good compatibility with the component (A), so that the resulting composition will be good in mechanical strength. The amount of the residue can be determined by ¹H-NMR spectrometry which will be described below.

The polyester component (B) is preferably one prepared by a process which comprises conducting the transesterification of other ester-forming monomers in the presence of a well-known catalyst and polycondensing the transesterification product, wherein an aromatic sulfonic acid compound represented by the general formula (I) is added to the reaction system in an initial stage of the transesterification. It is particularly preferable that the compound be added to the reaction system prior to the initiation of the transesterification. The polyester (B) according to the present invention can be prepared from the product obtained by the transesterification through well-known polycondensation. Further, the resin thus prepared may be subjected to solid phase polymerisation either under a reduced pressure or in the presence of an inert gas to enhance the degree of polymerisation.

The polyester resin composition of the present invention can be prepared by blending 100 parts by weight of the aromatic polyester resin (A) with 1 to 100 parts by weight of the aromatic polyester resin (B) containing a residue of the sulfonic aromatic sulfonic acid compound described above in a state bonded to the end of the backbone chain thereof. When the amount of the polyester (B) added is less than one part by weight, the resulting polyester resin composition will be little improved in the rate of crystallisation, while when it exceeds 100 parts by weight, the various characteristics inherent in the resin (A) will be lost. It is particularly preferable that the amount of the polyester (B) be 5 to 80 parts by weight per 100 parts by weight of the component (A). The suitable amounts of the components (A) and (B) to be blended, of course, vary depending upon the amount of the sulfonic acid compound introduced into the component (B). When a smaller amount of the sulfonic acid compound is introduced into the component (B), the use of a relatively larger amount of the component (B) is preferable, because it brings about a higher crystallisation-accelerating effect with little adverse effect on other properties. On the other hand, when a relatively larger amount of the sulfonic acid compound is introduced into the component (B), a sufficient crystallisation-accelerating effect can be attained even by the use of a small amount of the component (B), while the use of a large amount of the component (B) exerts an adverse effect on other properties.

The composition of the present invention can be prepared by the conventional melt kneading process using an extruder, a process comprising adding the polyester (B) in the course of the preparation of the polyester (A) through polymerisation or a process comprising mechanically blending pellets of the resins (A) and (B) together in a tumbler or blender and directly subjecting the blend to moulding. Particularly, the melt kneading process is preferable.

The polyester resin composition of the present invention thus prepared has a remarkable crystallisation-accelerating effect and is excellent in the processability in moulding and mechanical strength.

The polyester composition of the present invention may further contain, as auxiliary components, one or more members selected from among other thermoplastic resins, additives and organic and inorganic fillers depending upon the purpose in view, in such a range as not to mar the effects of the present invention. The thermoplastic resins include polyacetals, polystyrenic resins, polycarbonates, polyarylene oxides, polyarylene sulfides and fluororesins; the additives include well-known stabilizers such as ultraviolet absorbers and antioxidants, antistatic agents, flame retardants, auxiliary flame retardants, coloring agents such as dyes and pigments, lubricants, plasticizers, slip additives and mould release agents; inorganic fillers include glass fibres, milled glass fibres, glass beads, silica, alumina fibres, zirconia fibres, potassium titanate fibres, carbon black, graphite, calcium silicate, aluminium silicate, kaolin, talc, clay, iron oxide, titanium oxide, zinc oxide, antimony oxide, alumina, silicon carbide, silicon nitride and boron nitride; and organic fillers include high-melting fibres of polyester, aromatic polyamides, polyimides and fluororesins. These fillers may be surface treated with, e.g., an epoxy, isocyanate or silane compound.

The polyester resin composition of the present invention is improved in the rate of crystallisation, is excellent in the processability in injection moulding and gives a moulded article excellent in mechanical strength and heat resistance, thus being extremely useful as a moulding material.

### [EXAMPLES]

The present invention will now be described more specifically by referring to the following Examples, though the present invention is not limited to them.

### EXAMPLE 1

306.5 parts by weight of dimethyl terephthalate, 283.1 parts by weight of 1,4-butanediol, 3.8 parts by weight (1.0 mole %) of adduct (I-a) of sodium p-phenolsulfonate with one ethylene oxide molecule and a predetermined amount of titanium tetrabutoxide were fed into a reactor fitted with a stirrer and a distilling tube. The air in the resulting system was sufficiently purged with nitrogen and the stirring of the contents was started. The temperature of the contents was raised to 160°C under normal pressure. While raising the temperature gradually, the methanol formed as a by-product was distilled out. At the point of time at which the amount of the methanol distilled out exceeded 90% by weight of the theoretical amount, the temperature reached 240°C. From this point of time, the reactor was gradually evacuated and the contents were stirred under a pressure of 0.1 Torr (13.3 Pa) for 2.5 hours to give a polyester resin. This polyester resin had an intrinsic viscosity of 0.77 as determined in o-chlorophenol at 25°C. The degree of introduction of the adduct of sodium p-phenolsulfonate with one ethylene oxide molecule to the polymer was 1.0 mole % as determined by ¹H-NMR spectroscopy using trifluoroacetic acid-d as a solvent and X-ray fluorescence spectrometry. The pelletised resin thus obtained was sufficiently dried and evaluated for crystallisation characteristics. The results are given in Table 1.

In the Table, Tₘ represents the melting peak temperature of each polyester as determined according to JIS K 7121 at a temperature rise rate of 10°C/min and T_{c} the crystallisation peak temperature thereof as determined according to JIS K 7121 at a temperature drop rate of 10°C/min. The (Tₘ - T_{c}) value calculated from these temperatures serves as an indication of the rate of crystallisation. A smaller (Tₘ - T_{c}) value means a higher degree of acceleration of crystallisation. Further, X_{c} is a value calculated by the formula: 2ΔH/Y, wherein Y represents the crystallisation peak height of each polyester as determined according to JIS K 7121 and ΔH represents the heat of crystallisation thereof as determined according to JIS K 7122. A smaller X_{c} value means a higher degree of acceleration of crystallisation.

### COMPARATIVE EXAMPLE 1

A PBT homopolymer was prepared in the same manner as that of the Example 1 except that no compound represented by the formula (1) was added. The crystallisation characteristics thereof are given in Table 1.

### EXAMPLE 2 TO 4 AND COMPARATIVE EXAMPLES 2 TO 5

Polyester resins were prepared in the same manner as that of the Example 1 except that the adduct (I-a) of sodium p-phenolsulfonate with one ethylene oxide molecule was replaced by a predetermined amount (1.0 mole %) of adduct (I-b) of sodium p-phenolsulfonate with one propylene oxide molecule, adduct (I-c) of sodium p-phenolsulfonate with two ethylene oxide molecules, adduct (I-d) of sodium 2-naphthol-6-sulfonate with one ethylene oxide molecule, sodium salt (I'-1) of methyl m-sulfobenzoate, adduct (I'-2) of sodium 1,4-diphenyl-2-sulfonate with two ethylene oxide molecules, adduct (I'-3) of sodium m-phenolsulfonate with one ethylene oxide molecule or adduct (I'-4) of sodium 1-naphthol-2-sulfonate with one ethylene oxide molecule, the last four compounds being used for comparison. The degrees of introduction of the compounds were all 1.0 mole %. The crystallisation characteristics of the polyester resins are given in Table 1.

### COMPARATIVE EXAMPLE 6

100 parts by weight of the PBT homopolymer prepared in the Comparative Example I and 0.01 part by weight of powdered boron nitride (BN) (a product of Denki Kagaku Kogyo K. K.) as a nuclear agent for crystallisation were melt-kneaded together on a twin-screw extruder having an inner diameter of 30 mm and fitted with a screw feeder and a vent at a cylinder temperature of 260°C to give a pelletised resin composition. The crystallisation characteristics of the composition are given in Table 1.

It can be understood from the results given in Table 1 that the crystallisation of the polyester resin prepared by using the aromatic sulfonic acid compound of the formula (I) represented by the adduct (I-a) of sodium p-phenolsulfonate with one ethylene oxide molecule is efficiently accelerated, while the crystallisation of the polyester prepared by using an aromatic sulfonic acid compound deviating from the definition of the present invention in respect of the position of substitution or a multifunctional aromatic sulfonic acid compound is not accelerated sufficiently.

### COMPARATIVE EXAMPLE 7

306.5 parts by weight of dimethyl terephthalate, 283.1 parts by weight of 1,4-butanediol and a predetermined amount of titanium tetrabutoxide were fed into a reactor fitted with a stirrer and a distilling tube. The air in the resulting system was purged with nitrogen sufficiently and the stirring of the contents was started. The temperature of the contents was raised to 160°C under normal pressure. While raising the temperature gradually, the methanol formed as a by-product was distilled out. At the point of time at which the amount of the methanol distilled out exceeded 92% by weight of the theoretical amount, 3.8 parts by weight (1.0 mole %) of the adduct (I-a) of sodium p-phenolsulfonate with one ethylene oxide molecule was added to the reactor and the temperature of the contents was raised to 240°C. The reactor was gradually evacuated and the contents were stirred under a pressure of 0.1 Torr (13.3 Pa) for 2.5 hours to give a polyester resin. The crystallisation characteristics of the resin are given in Table 2.

### COMPARATIVE EXAMPLE 8

306.5 parts by weight of dimethyl terephthalate, 283.1 parts by weight of 1,4-butanediol and a predetermined amount of titanium tetrabutoxide were fed into a reactor fitted with a stirrer and a distilling tube. The air in the resulting system was purged with nitrogen sufficiently and the stirring of the contents was started. The temperature of the contents was raised to 160°C under normal pressure. While raising the temperature gradually, the methanol formed as a by-product was distilled out. At the point of time at which the amount of the methanol distilled out exceeded 90% by weight of the theoretical amount, the temperature reached 240°C. From this point of time, the reactor was gradually evacuated and the contents were stirred under a pressure of 0.1 Torr (13.3 Pa) for 2.0 hours, followed by the addition of 3.8 parts by weight (1.0 mole %) of the adduct (I-a) of sodium p-phenolsulfonate with one ethylene oxide molecule. The resulting mixture was further stirred for 0.5 hour to give a polyester resin. The crystallisation characteristics of the resin are given in Table 2.

### COMPARATIVE EXAMPLE 9

700 parts by weight of the PBT homopolyester prepared in the Comparative Example 1 and 7.6 parts by weight (1.0 mole % based on the ester units constituting the polyester) of the adduct (I-a) of sodium p-phenolsulfonate with one ethylene oxide molecule were melt-kneaded together on the same twin-screw extruder as the one used in the Comparative Example 6 at a cylinder temperature of 260°C to give a pelletised resin composition. The crystallisation characteristics of the composition are given in Table 2.

### COMPARATIVE EXAMPLE 10

700 parts by weight of the PBT homopolyester prepared in the Comparative Example 1 and 7.6 parts by weight of sodium benzenesulfonate were melt-kneaded together on a twin-screw extruder at a cylinder temperature of 260°C to give a pelletised resin composition. The crystallisation characteristics of the composition are given in Table 2.

It can be understood from the results given in Table 2 that the polyester resin prepared by adding the aromatic sulfonic acid compound represented by the adduct (I-a) of sodium p-phenolsulfonate with one ethylene oxide molecule to the reaction system in an initial stage of the trans-esterification, i.e., before the amount of the alcohol distilled out reaches 90% by weight of the theoretical amount exhibits a particularly excellent crystallisation-accelerating effect. Further, as understood from the results of the Comparative Examples 9 and 10, the polyester resin composition prepared by melt-kneading a polyester together with the adduct (I-a) of sodium p-phenolsulfonate with one ethylene oxide molecule exhibits only a crystallisation-accelerating effect equivalent to that of the resin composition prepared by melt-kneading a polyester together with sodium benzenesulfonate having no ester-forming functional group. This fact means that the bonding of the adduct to the end of the polyester molecule hardly occurs in the Comparative Example 9, which is a reason why the composition of the Comparative Example 9 exhibits only a poor crystallisation-accelerating effect. Further, fine deposits of undissolved part of the aromatic sulfonic acid compound were observed on the surface of the resin pellets prepared in the Comparative Examples 9 and 10.

### EXAMPLES 5 TO 7

Polyester resins were prepared in the same manner as that of the Example 1 except that the amount of the adduct (I-a) of sodium p-phenolsulfonate with one ethylene oxide molecule to be used was varied. The obtained resins were evaluated for crystallisation characteristics. Further, the resins were each injection moulded into a test piece for tensile test by a conventional process and the mechanical strength (tensile strength) thereof was determined according to ASTM D 638. The results are given in Table 3.

### COMPARATIVE EXAMPLE 11 AND EXAMPLE 7A

Polyester resins were prepared in the same manner as that of the Example 1 except that the amount of the adduct (I-a) of sodium p-phenolsulfonate with one ethylene oxide molecule to be used was varied. The obtained pelletised resins were sufficiently dried and evaluated for crystallisation characteristics. Further, they were each injection moulded into a test piece for tensile test by a conventional process and the mechanical strength (tensile strength) thereof was determined according to ASTM D 638. The results are given in Table 3.

It can be understood from the results given in Table 3 that when the amount of the adduct (I-a) of sodium p-phenolsulfonate with one ethylene oxide molecule is less than 0.02 mole %, little crystallisation-accelerating effect is attained, while when it exceeds 1.80 mole %, the mechanical strength is lowered.

### EXAMPLES 8 AND 9

246.0 parts by weight of dimethyl terephthalate, 61.5 parts by weight of dimethyl isophthalate, 284.5 parts by weight of 1,4-butanediol, 1.9 parts by weight (0.5 mole %) or 3.8 parts by weight (1.0 mole %) of the adduct (I-a) of sodium p-phenolsulfonate with one ethylene oxide molecule and a predetermined amount of titanium tetrabutoxide were fed into a reactor fitted with a stirrer and a distilling tube. The resulting system was sufficiently purged with nitrogen and the stirring of the contents was started. The temperature of the contents was raised to 160°C. While raising the temperature gradually, the methanol formed as a by-product was distilled out. At the point of time at which the amount of the methanol distilled out exceeds 90% by weight of the theoretical amount, the temperature reached 235°C. From this point of time, the reactor was gradually evacuated and the contents were stirred under a pressure of 0.1 Torr (13.3 Pa) for 3.0 hours to give a polyester resin. The polyester resins thus prepared had an intrinsic viscosity of 0.75 as determined in o-chlorophenol at 25°C. The degrees of introduction of the adduct of sodium p-phenolsulfonate with one ethylene oxide molecule into the resins were 0.5 mole % and 1.0 mole %. The obtained pelletised resins were dried sufficiently and evaluated for crystallisation characteristics. The results are given in Table 4. The amount of the dimethyl isophthalate residues introduced was determined by ¹ H-NMR spectroscopy using trifluoroacetic acid-d as a solvent.

### COMPARATIVE EXAMPLE 13

A copolyester resin was prepared in the same manner as that of the Example 8 except that no adduct of sodium p-phenolsulfonate with one ethylene oxide molecule was used. The crystallisation characteristics thereof are given in Table 4.

### COMPARATIVE EXAMPLES 14 AND 15

The polyester resin prepared in the Preparative Example 13 and a predetermined amount of powdered boron nitride (BN) were melt-kneaded together on a twin-screw extruder at a cylinder temperature of 235°C to give a pelletised resin composition. The crystallisation characteristics thereof are given in Table 4.

It can be understood from the results given in Table 4 and those of the Comparative Examples I and 6 that a copolyester containing the aromatic sulfonic acid compound of the formula (I) introduced thereinto by the specified process sufficiently retains the crystallisation-accelerating effect due to the compound, though a copolyester containing powdered boron nitride (BN) loses much of the crystallisation-accelerating effect due to powdered boron nitride.

### EXAMPLE 10 AND COMPARATIVE EXAMPLE 16

329.6 parts by weight of dimethyl terephthalate, 258.3 parts by weight of 1,3-propanediol, 1.9 parts by weight (0.5 mole %) of the adduct (I-a) of sodium p-phenolsulfonate with one ethylene oxide molecule and a predetermined amount of titanium tetrabutoxide were fed into a reactor fitted with a stirrer and a distilling tube. The air in the resulting system was sufficiently purged with nitrogen and the stirring of the contents was started. The temperature of the results are given in Table 5.

### EXAMPLE 11 AND COMPARATIVE EXAMPLE 17

334.9 parts by weight of dimethyl terephthalate, 247.7 parts by weight of ethylene glycol, 2.1 parts by weight (0.5 mole %) of the adduct (I-a) of sodium p-phenol-sulfonate with one ethylene oxide molecule and a predetermined amount of titanium tetrabutoxide were fed into a reactor fitted with a stirrer and a distilling tube. The air in the resulting system was sufficiently purged with nitrogen and the stirring of the contents was started. The temperature of the contents was raised to 185°C under normal pressure. While raising the temperature gradually, the methanol formed as a by-product was distilled out. The temperature was raised to 270°C and from this point of time, the reactor was evacuated gradually. The contents were stirred under a pressure of 0.1 Torr (13.3 Pa) for 2.5 hours to give a polyester resin. This polyester resin had an intrinsic viscosity of 0.67 as determined in o-chlorophenol at 25°C. The degree of introduction of the adduct was 0.5 mole %. The obtained pelletised resin was sufficiently dried and evaluated for crystallisation characteristics. For comparison, another PET homopolyester was prepared in the same manner as that described above except that no adduct was used. The results are given in Table 5.

As understood from the results given in Table 5, various polyesters can be remarkably improved in crystallisation characteristics by introducing a specified amount of the aromatic sulfonic acid compound represented by the adduct of sodium p-phenolsulfonate with one ethylene oxide molecule thereinto by the process specified in the present invention.

### COMPARATIVE EXAMPLE 18

334.9 parts by weight of dimethyl terephthalate, 247.7 parts by weight of ethylene glycol, 2.1 parts by weight (0.5 mole %) of the adduct (I-a) of sodium p-phenol-sulfonate with one ethylene oxide molecule and a predetermined amount of calcium acetate were fed into a reactor fitted with a stirrer and a distilling tube. The air in the resulting system was purged with nitrogen sufficiently and the stirring of the contents was started. The temperature of the contents was raised to 185°C under normal pressure. While further raising the temperature gradually, the methanol formed as a by-product was distilled out. At the point of time at which the amount of the methanol distilled out exceeded 90% by weight of the theoretical amount, a predetermined amount of antimony trioxide was added and the temperature was raised to 270°C. From this point of time, the reactor as gradually evacuated and the contents were stirred under a pressure of 0.1 Torr (13.3 Pa) for 3.5 hours to give a polyester resin. This resin had an intrinsic viscosity of 0.68 as determined in o-chlorophenol at 25°C. The obtained pelletised resin was sufficiently dried and evaluated for crystallisation characteristics. The results are given in Table 5. it can be understood from the results that when no titanium compound was used as a catalyst, the resulting polyester has no sufficient crystallisation-accelerating effect.

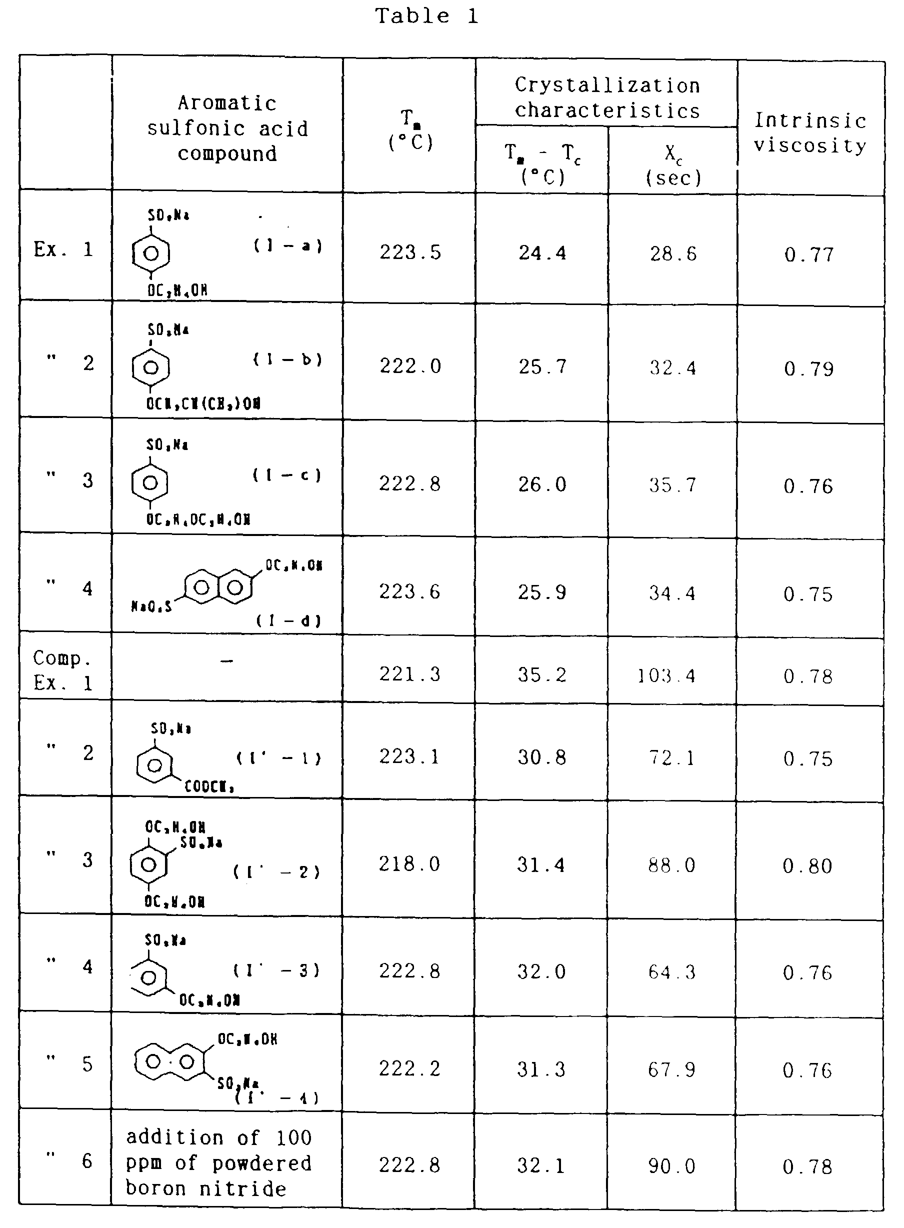

**Table 2**

| | Time of addition of aromatic sulfonic acid compound* | Tₘ (°C) | Crystallization characteristics | | Intrinic viscosity |
|---|---|---|---|---|---|
| | | | Tₘ - T_{c} (°C) | X_{c} (sec) | |
| Ex. 1 | before the initiation of transesterification (amt. of methanol distilled out: 0) | 223.5 | 24.4 | 28.6 | 0.77 |
| Comp. Ex. 7 | in a final stage of transesterification (amt. of methanol distilled out: 92%) | 222.9 | 27.6 | 59.9 | 0.77 |
| " 8 | in a final stage of polycondensation | 222.0 | 28.0 | 78.3 | 0.77 |
| " 9 | in melt kneading on extruder | 221.5 | 28.3 | 87.5 | 0.78 |
| " 10 | in melt kneading on extruder | 220.0 | 28.7 | 84.4 | 0.78 |

| | | | | | |
|---|---|---|---|---|---|
| * Adduct of sodium p-phenolsulfonate with one ethylene oxide molecule was used in Example 1 and Comparative Examples 7 to 9, while sodium benzenesulfonate in Comparative Example 10. | | | | | |

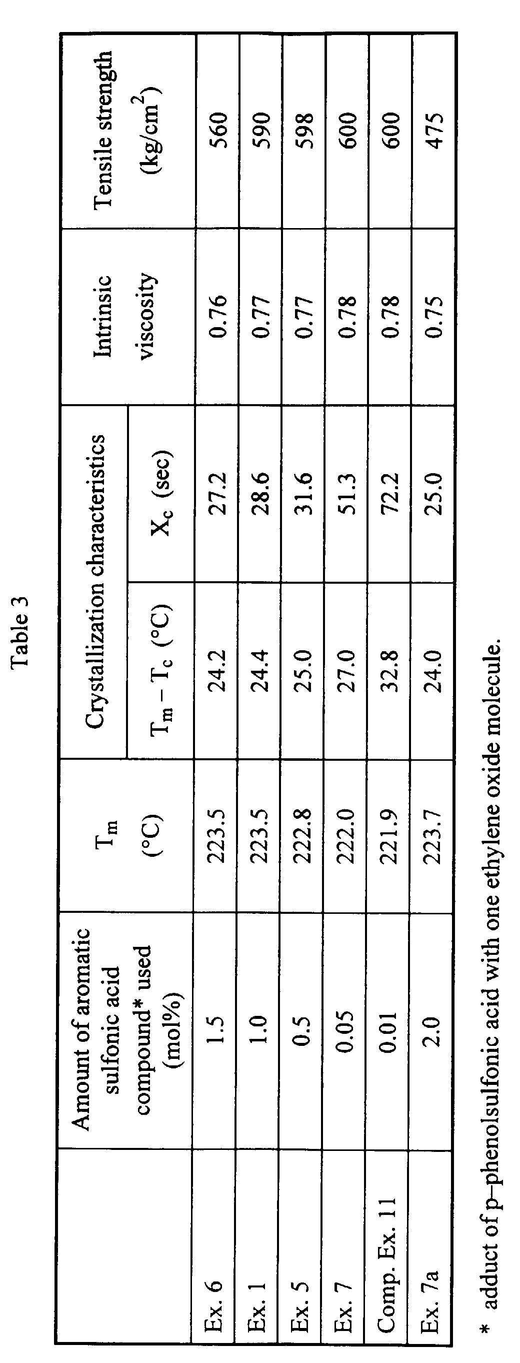

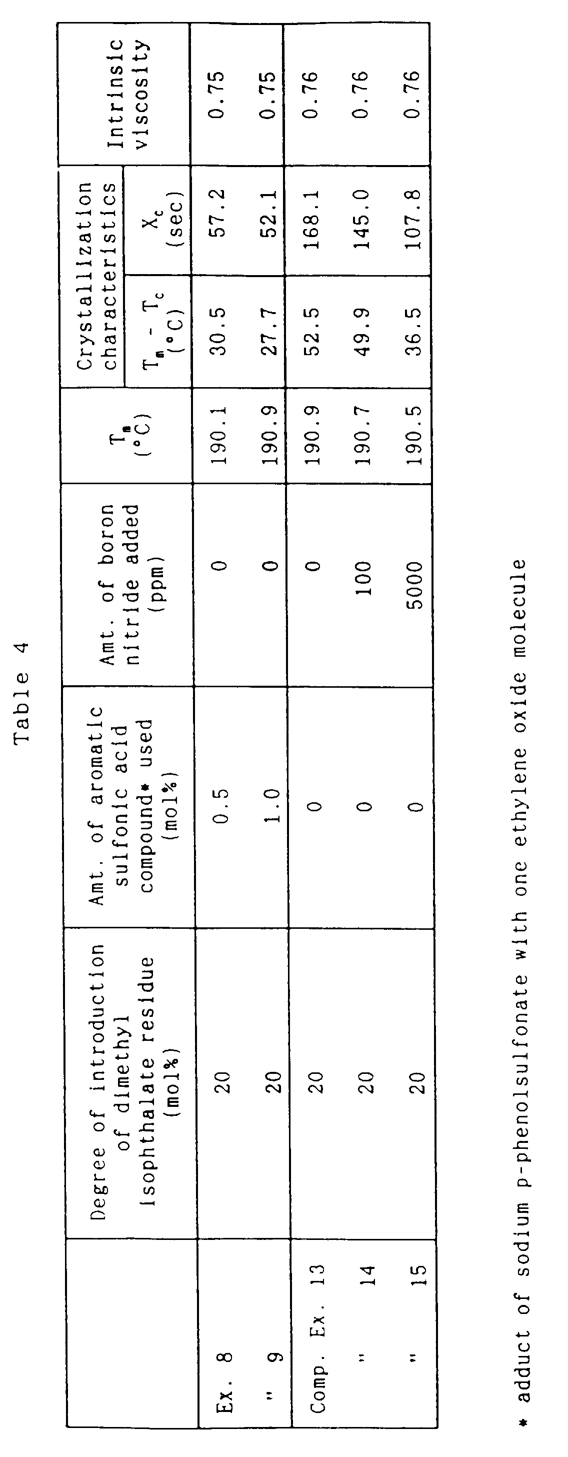

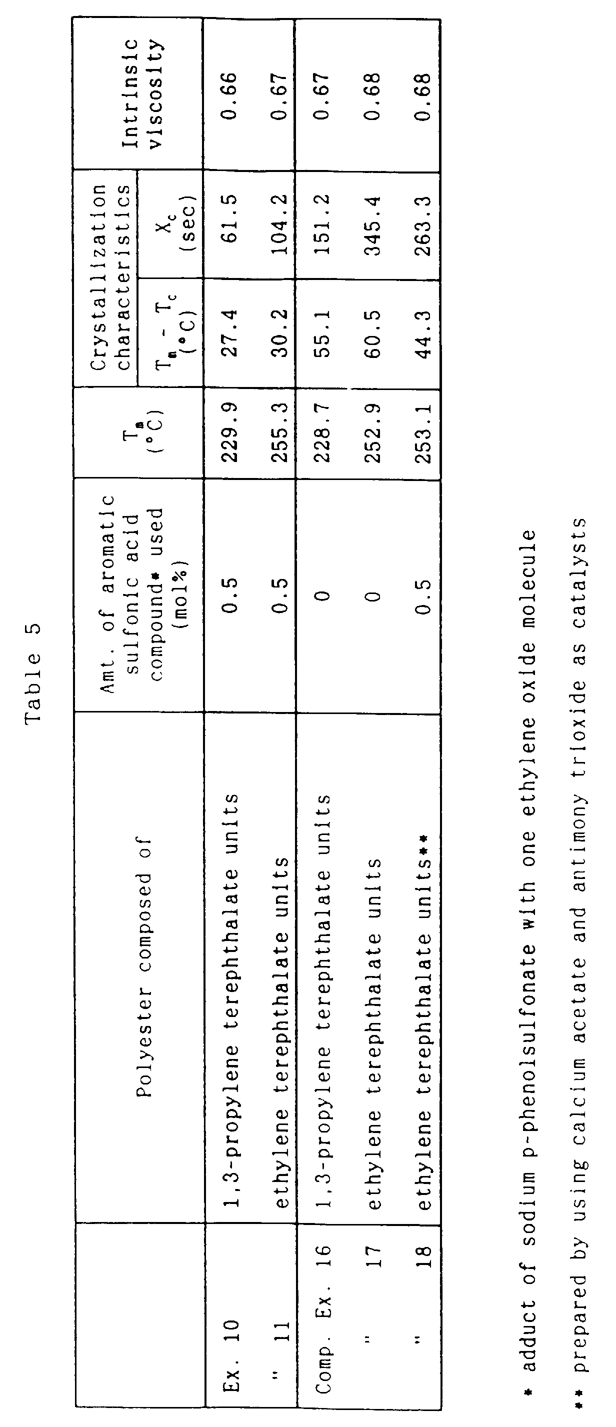

### EXAMPLE 12 (SYNTHESIS OF POLYESTER B-1)

306.5 parts by weight of dimethyl terephthalate, 282.2 parts by weight of 1,4-butanediol, 4.8 parts by weight of adduct (I-a) of sodium p-phenolsulfonate with one ethylene oxide molecule and a predetermined amount of titanium tetrabutoxide were fed into a reactor fitted with a stirrer and a distilling tube. The air in the resulting system was sufficiently purged with nitrogen. The stirring of the contents was started and the temperature thereof was raised to 160°C under normal pressure. While raising the temperature gradually, the methanol formed as a by-product was distilled out. At the point of time at which the temperature of the contents reached 240°C, the reactor was gradually evacuated and the contents were stirred under a pressure of 0.1 Torr (13.3 Pa) for 2.5 hours to give a polyester resin. This polyester resin had an intrinsic viscosity of 0.76 as determined in o-chlorophenol at 25°C. The amount of a residue of the aromatic sulfonic acid compound bonded to the end of the backbone chain of the polyester resin was 1.3 mole % (based on all the repeating ester units) as determined by ¹H-NMR spectrometry using trifluoroacetic acid-d as a solvent.

### EXAMPLES 13 to 15

### (SYNTHESIS OF POLYESTERS B-2, B-3 AND B'-4)

Polyester resins were prepared in the same manner as that of the Example 12 except that the amount of the adduct (I-a) to be added was varied. The amounts of a residue of the sulfonic acid compound (I-a) introduced into the resins (B-2), (B-3) and (B'-4) were 0.30, 3.0 and 7.5 mole %, respectively, based on all the repeating ester units.

### EXAMPLES 16 and 17

### (SYNTHESIS OF POLYESTERS B-5 AND B'-6)

Polyester resins were prepared in the same manner as that of the Example 12 except that a predetermined amount of adduct (I-b) of sodium 2-naphthol-6-sulfonate with one ethylene oxide molecule or sodium salt (I'-1) of hydroxyethyl m-sulfobenzoate (35% by weight solution in ethylene glycol, for comparison) was used instead of the adduct (I-a). The amount of a residue of the aromatic sulfonic acid compound (I-b) bonded to the end of the backbone chain was 1.2 mole % (B-5), while that of a residue of the aromatic sulfonic acid compound (I'-1) bonded thereto was 1.0 mole % (B'-B), each of the amounts being determined by ¹H-NMR spectrometry using trifluoroacetic acid-d as a solvent and calculated based on all the repeating ester units.

The characteristic values of the Polyesters (B and B') prepared in the Examples 12 to 17 are given together in Table 6. Further, those of the polyesters (A) used in the following Examples and Comparative Examples are also given therein.

### EXAMPLES 18 TO 27 AND COMPARATIVE EXAMPLES 19 TO 26

One of the polyesters (A) listed in Table 6 was melt-mixed with one of the polyesters (B) and (B') listed therein at a ratio specified in Table 7 or 8 on a twin-screw extruder having an inner diameter of 30 mm and fitted with a vent to give a pelletised resin composition. The compositions thus prepared were sufficiently dried and evaluated for crystallisation characteristics. Thereafter, each composition was injection moulded into a test piece for tensile test and this test piece was examined for tensile strength according to ASTM D 638 and evaluated for the rate of crystallisation. In the Tables, T, represents the melting peak temperature of each composition as determined according to JIS K 7120 at a temperature rise rate of 10°C/min and T_{c} represents the crystallisation peak temperature thereof as determined according to JIS K 7120 at a temperature drop rate of 10°C/min. The (Tₘ - T_{c}) value calculated therefrom serves as an indication of the rate of crystallisation. A smaller (Tₘ - T_{c}) value means a higher degree of acceleration of crystallisation. Further, ΔT_{c} represents a difference between the crystallisation onset temperature as determined according to JIS K 7120 at a temperature drop rate of 10°C/min and the crystallisation peak temperature and a smaller ΔT_{c} value means a higher degree of acceleration of crystallisation.

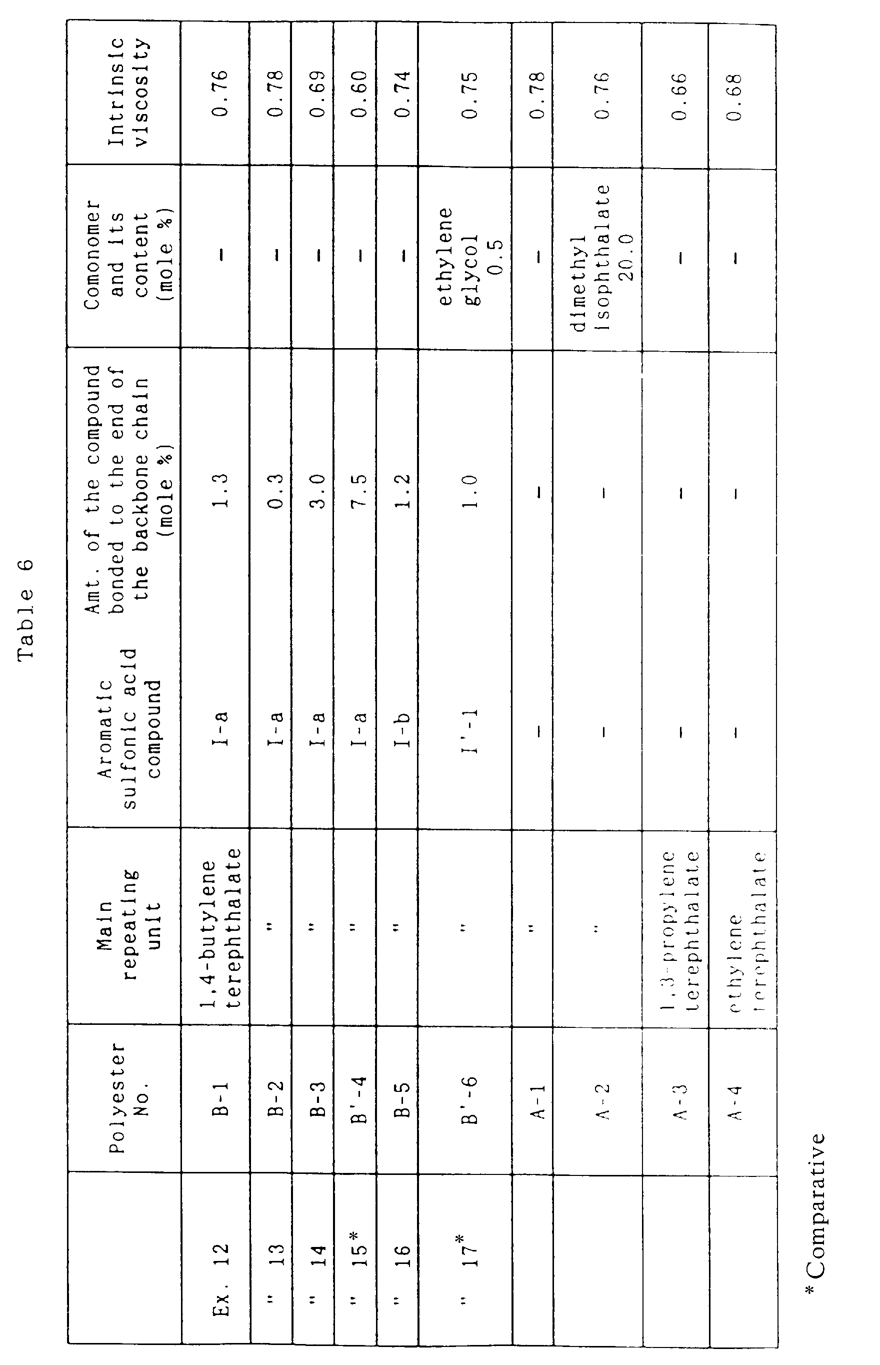

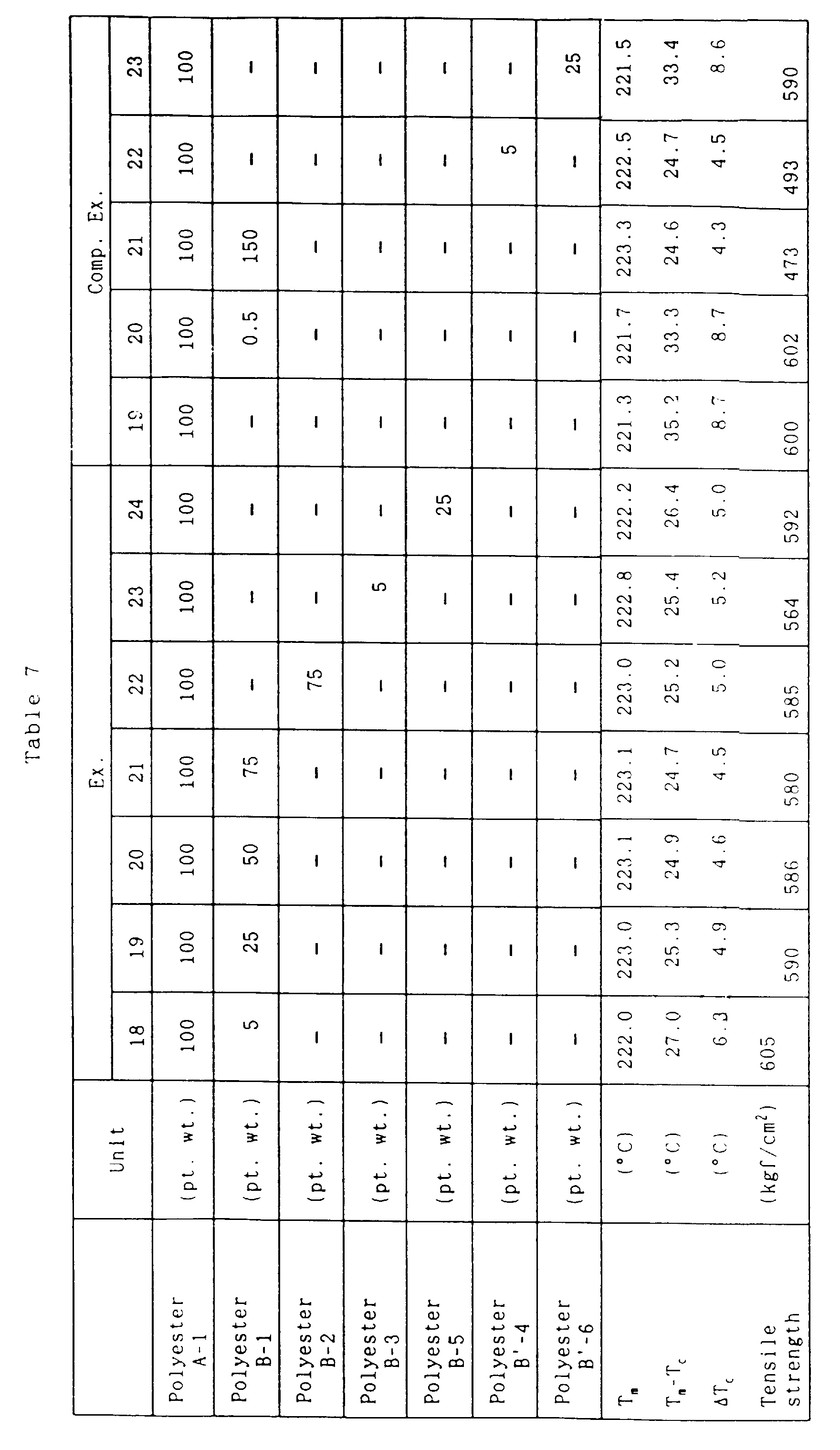

**Table 8**

| | Unit | Ex. | | | Comp. Ex. | | |
|---|---|---|---|---|---|---|---|
| | | 25 | 26 | 27 | 24 | 25 | 26 |
| Polyester A-2 | (pt. wt.) | 100 | - | - | 100 | - | - |
| Polyester A-3 | (pt. wt.) | - | 100 | - | - | 100 | - |
| Polyester A-4 | (pt. wt.) | - | - | 100 | - | - | 100 |
| Polyester B-1 | (pt. wt.) | 25 | 25 | 25 | - | - | - |
| Tₘ | (°C) | 193.8 | 228.7 | 246.7 | 190.9 | 228.7 | 253.0 |
| Tₘ-T_{c} | (°C) | 33.2 | 34.4 | 35.1 | 52.5 | 55.1 | 60.5 |
| ΔT_{c} | (°C) | 8.3 | 7.7 | 11.3 | 12.4 | 11.0 | 27.9 |

## Claims

1. A process of preparing a polyester which comprises reacting a lower alkyl ester of an aromatic dicarboxylic acid with an aliphatic diol to form an aromatic polyester, characterized in that transesterification of such lower alkyl ester with such diol is carried out in the presence of 0.02 to 5.0 mole %, based on the lower alkyl ester, of an aromatic sulfonic acid compound represented by general formula (I)
HO-R-0-Ar-SO₃M (I)
wherein -Ar- is a group selected between p-substituted benzene and 2,6-substituted naphthalene groups;
R is a divalent group selected from among -CH₂CH₂-, -CH(CH₃)CH₂-, -CH₂CH(CH₃)- and -CH₂CH₂0CH₂CH₂-;
and M is an alkali metal selected from among lithium, sodium and potassium
using a titanium compound as a catalyst and thereafter polycondensing the transesterification product, and in which said aromatic sulfonic acid compound is present during a period of said transesterification before the amount of the lower alcohol formed by such transesterification distilled out has reached 90% by weight of the theoretical amount, whereby 0.02 to 5.0 mole % (based on the repeating ester units) of residue of said aromatic sulfonic acid compound is bonded to an end of the polyester backbone chain.

2. The process for the preparation of a polyester as set forth in claim 1, wherein the amount of said aromatic sulfonic acid compound is 0.02 to 1.8 mole % based on said lower alkyl ester.

3. The process for the preparation of a polyester as set forth in claim 1, wherein said aromatic sulfonic acid compound is present in an amount such that the product contains residue thereof in a proportion of 0.2 to 3.0 mole % based on all the repeating ester units of such product.

4. The process for the preparation of a polyester as set forth in claim 1, wherein more than 50 mole % of said lower alkyl ester of an aromatic dicarboxylic acid is selected from among dimethyl terephthalate, dimethyl 2,6-naphthalenedicarboxylate and dimethyl 2,7-naphthalenedicarboxylate.

5. The process for the preparation of a polyester as set forth in claim 1, wherein more than 50 mole % of said aliphatic diol is selected from among ethylene glycol, 1,3-propanediol and 1,4-butanediol.

6. The process for the preparation of a polyester as set forth in claim 1, wherein said titanium compound is a titanium tetraalkoxide.

7. A polyester which is produced by the process as claimed in claim 1.

8. A polyester comprising at least 80 mole % of 1,4-butylene terephthalate or 1,4-butylene-2,6-naphthalate and 0.1 to 5.0 mole % (based on all the repeating ester units) of a residue of the aromatic sulfonic acid compound represented by the general formula (1) defined in claim 1 which is bonded to the end of the backbone chain of the polyester through ester linkage.

9. A polyester resin composition prepared by blending
(A) 100 parts by weight of an aromatic polyester resin comprising alkylene terephthalate or alkylene naphthalate repeating unit with
(B) 1 to 100 parts by weight of an aromatic polyester resin as claimed in claim 8.

## Patentansprüche

1. Verfahren zur Herstellung eines Polyesters, umfassend das Umsetzen eines Niederalkylesters einer aromatischen Dicarbonsäure mit einem aliphatischen Diol, wodurch ein aromatischer Polyester gebildet wird, dadurch gekennzeichnet, daß die Umesterung eines solchen Niederalkylesters mit einem solchen Diol in der Gegenwart von 0,02 bis 5,0 mol-%, bezogen auf den Niederalkylester, einer aromatischen Sulfonsäure-Verbindung durchgeführt wird, die durch die allgemeine Formel (I)
HO-R-O-Ar-SO₃M (I)
dargestellt wird, wobei -Ar- eine zwischen p-substituiertem Benzol und 2,6-substituierten Naphthalingruppen ausgewählte Gruppe ist; R eine zweiwertige, aus -CH₂CH₂-, -CH(CH₃)CH₂-, -CH₂CH(CH₃)- und -CH₂CH₂OCH₂CH₂- ausgewählte Gruppe ist und M ein aus Lithium, Natrium und Kalium ausgewähltes Alkalimetall ist, wobei eine Titanverbindung als Katalysator verwendet wird, und danach das Polykondensieren des Umesterungsprodukts, wobei die aromatische Sulfonsäureverbindung während eines Zeitraums der Umesterung, bevor die Menge des durch eine solche Umesterung gebildeten, abdestillierten, niederen Alkohols 90 Gew.-% der theoretischen Menge erreicht hat, vorhanden ist, wodurch 0,02 bis 5,0 mol-% (bezogen auf die Repetier-Estereinheiten) des Restes der aromatischen Sulfonsäure-Komponenten an ein Ende der Polyester-Hauptkette gebunden wird.

2. Verfahren zur Herstellung eines Polyesters nach Anspruch 1, wobei die Menge der aromatischen Sulfonsäure-Verbindung 0,02 bis 1,8 mol-%, bezogen auf den Niederalkylester, beträgt.

3. Verfahren zur Herstellung eines Polyesters nach Anspruch 1, wobei die aromatische Sulfonsäure-Verbindung in so einer Menge vorhanden ist, daß das Produkt deren Rest mit einem Anteil von 0,2 bis 3,0 mol-%, bezogen auf alle Repetier-Estereinheiten eines solchen Produkts, enthält.

4. Verfahren zur Herstellung eines Polyesters nach Anspruch 1, wobei mehr als 50 mol-% des Niederalkylesters einer aromatischen Dicarbonsäure aus Dimethylterephthalat, Dimethyl-2,6-naphthalindicarboxylat und Dimethyl-2,7-naphthalindicarboxylat ausgewählt ist.

5. Verfahren zur Herstellung eines Polyesters nach Anspruch 1, wobei mehr als 50 mol-% des aliphatischen Diols aus Ethylenglycol, 1,3-Propandiol und 1,4-Butandiol ausgewählt ist.

6. Verfahren zur Herstellung eines Polyesters nach Anspruch 1, wobei die Titanverbindung ein Titantetraalkoxid ist.

7. Polyester, der durch das Verfahren nach Anspruch 1 hergestellt wird.

8. Polyester, umfassend wenigstens 80 mol-% 1,4-Butylenterephthalat oder 1,4-Butylen-2,6-naphthalat und 0,1 bis 5,0 mol-% (bezogen auf alle Repetier-Estereinheiten) eines Restes der aromatischen, durch die allgemeine, in Anspruch 1 definierten Formel (1) wiedergegebenen Sulfonsäure-Verbindung, der durch Esterbindung an das Ende der Hauptkette des Polyesters gebunden ist.

9. Polyesterharz-Zusammensetzung, hergestellt durch das Mischen von
(A) 100 Gew.-Teilen eines aromatischen Polyesterharzes, der eine Alkylenterephthalat- oder Alkylennaphthalat-Repetiereinheit umfaßt, mit
(B) 1 bis 100 Gew.-Teilen eines aromatischen Polyesterharzes nach Anspruch 8.

## Revendications

1. Un procédé de préparation d'un polyester qui consiste à faire réagir un ester d'alkyle inférieur d'un acide dicarboxylique aromatique avec un diol aliphatique pour former un polyester aromatique, caractérisé en ce que la trans-estérification de cet ester d'alkyle inférieur avec ce diol est effectuée en présence de 0,02 à 5,0 mol %, par rapport à l'ester d'alkyle inférieur, d'un composé d'acide sulfonique aromatique représenté par la formule générale (I)
HO-R-O-Ar-SO₃M (I)
où -Ar- est un groupe choisi parmi les groupes benzène substitué en para et naphtalène substitués en 2,6 ;
R est un groupe divalent choisi parmi -CH₂CH₂-, -CH(CH₃)CH₂-, -CH₂CH(CH₃)- et -CH₂CH₂OCH₂CH₂- ;
et M est un métal alcalin choisi parmi le lithium, le sodium et le potassium,
en utilisant un composé du titane comme catalyseur, puis en effectuant une polycondensation du produit de transi estérification, et dans lequel ledit composé d'acide sulfonique aromatique est présent pendant une période de ladite trans-estérification située avant que la quantité de l'alcool inférieur formé par cette trans-estérification enlevée par distillation ait atteint 90 % en poids de la quantité théorique, si bien que le résidu dudit composé d'acide sulfonique aromatique soit lié en une proportion de 0,02 à 5,0 mol % (par rapport aux motifs ester récurrents) à une extrémité de la chaîne principale du polyester.

2. Le procédé de préparation d'un polyester tel que spécifié dans la revendication 1, dans lequel la quantité dudit composé d'acide sulfonique aromatique est de 0,02 à 1,8 mol % par rapport audit ester d'alkyle inférieur.

3. Le procédé de préparation d'un polyester tel que spécifié dans la revendication 1, dans lequel ledit composé d'acide sulfonique aromatique est présent en une quantité telle que le produit contienne son résidu en une proportion de 0,2 à 3,0 mol % par rapport à la totalité des motifs ester récurrents de ce produit.

4. Le procédé de préparation d'un polyester tel que spécifié dans la revendication 1, dans lequel on choisit plus de 50 mol % dudit ester d'alkyle inférieur d'un acide dicarboxylique aromatique parmi le téréphtalate de diméthyle, le 2,6-naphtalènedicarboxylate de diméthyle et le 2,7-naphtalènedicarboxylate de diméthyle.

5. Le procédé de préparation d'un polyester tel que spécifié dans la revendication 1, dans lequel on choisit plus de 50 mol % dudit diol aliphatique parmi l'éthylène-glycol, le 1,3-propanediol et le 1,4-butanediol.

6. Le procédé de préparation d'un polyester tel que spécifié dans la revendication 1, dans lequel ledit composé du titane est un tétra-alcoolate de titane.

7. Un polyester qui est produit par le procédé tel que revendiqué dans la revendication 1.

8. Un polyester comprenant au moins 80 mol % de téréphtalate de 1,4-butylène ou de 2,6-naphtalate de 1,4-butylène et 0,1 à 5,0 mol % (par rapport à tous les motifs ester récurrents) d'un résidu du composé d'acide sulfonique aromatique représenté par la formule générale (I) définie dans la revendication 1 qui est lié par une liaison ester à l'extrémité de la chaîne principale du polyester.

9. Une composition de résine polyester préparée en mélangeant
(A) 100 parties en poids d'une résine polyester aromatique comprenant un motif récurrent de téréphtalate d'alkylène ou de naphtalate d'alkylène, avec
(B) 1 à 100 parties en poids d'une résine polyester aromatique telle que revendiquée dans la revendication 8.
